**Europäisches Patentamt**

**European Patent Office**

**Office européen des brevets**

(19)

(11) Veröffentlichungsnummer: **0 028 282**
**B1**

(12) **EUROPÄISCHE PATENTSCHRIFT**

(45) Veröffentlichungstag der Patentschrift:
**21.09.83**

(51) Int. Cl.³: **A 01 G 9/22**

(21) Anmeldenummer: **80101125.5**

(22) Anmeldetag: **06.03.80**

(54) **Isolierung von hallenartigen Gebäuden.**

(30) Priorität: **30.10.79 DE 2943743**

(43) Veröffentlichungstag der Anmeldung:
**13.05.81 Patentblatt 81/19**

(45) Bekanntmachung des Hinweises auf die Patenterteilung:
**21.09.83 Patentblatt 83/38**

(84) Benannte Vertragsstaaten:
**DE FR NL**

(56) Entgegenhaltungen:
**DE-A-1 913 250**
**DE-A-2 518 702**
**DE-A-2 805 848**
**FR-A-1 512 100**
**FR-A-1 564 910**
**FR-A-2 282 027**
**US-A-4 095 639**

(73) Patentinhaber: **Felix Heescher Gesellschaft mit beschränkter Haftung, Rheiner Strasse 31, D-4441 Bevergern (DE)**

(72) Erfinder: **Heescher, Felix, Rheiner Strasse 31, D-4441 Bevergern (DE)**
Erfinder: **Caroe, Claus J., Kirsebaerbakken 8, DK-3070 Snekkersten (DK)**

(74) Vertreter: **Habbel, Hans-Georg, Dipl.-Ing., Postfach 3429 Am Kanonengraben 11, D-4400 Münster (DE)**

## Isolierung von hallenartigen Gebäuden

Die Erfindung bezieht sich auf eine Isolierung von hallenartigen Gebäuden, insbesondere Gewächshäusern, im Bereich der Dächer und Wände mittels wenigstens einer mehrschichtigen, quer zu ihrer Bewegungsrichtung auf Haltevorrichtungen verschieblich getragenen und zickzackförmig faltbaren, wärmedämmenden Noppenfolienbahn, die mittels Zugmitteln hin- und herbewegbar angeordnet ist und in ihren oberen Faltzonen Befestigungs- und Führungsmittel trägt.

In der den Gattungsbegriff bildenden DE-A 28 05 848 wird eine Einrichtung zur thermischen Isolierung eines Gewächshauses beschrieben, bei welcher eine wärmedämmende Foliendecke, beispielsweise eine Luftpolsterfolie, auf Haltevorrichtungen verschieblich bei Überführen in die Offenposition leporelloartig faltbar ist. Der durch die aufgefaltete Folie beanspruchte Raum ist relativ gross und führt dadurch zwangsläufig zu Lichtverlusten innerhalb des Gewächshauses und damit zu Kulturverlusten der Pflanzen. Auf den Haltevorrichtungen wird die Foliendecke durch Clips gehalten, die im ungefalteten Zustand der Foliendecke durch diese hindurchgenietet sind. Das Anbringen dieser Nieten ist nur im ungefalteten Zustand der Foliendecke möglich und daher arbeitsaufwendig. Im Bereich der Foliendecke kann leicht ein Ausreissen der Clips erfolgen, da durch den durch die Foliendecke hindurchgestochenen Tragdorn die Folie verletzt wird, so dass sich hier Einreisskanten leicht bilden können.

Der Erfindung liegt die Aufgabe zugrunde, die gattungsgemässe Einrichtung dahingehend zu verbessern, dass einerseits der im gefalteten Zustand der Isolierung erforderliche Platzbedarf möglichst gering ist, der Befestigungsbereich an der Folie für die mit den Haltevorrichtungen in Verbindung kommenden Aufhängevorrichtungen möglichst widerstandsfähig ist und die Befestigungs- und Führungsmittel von aussen ansetzbar sind.

Diese der Erfindung zugrundeliegende Aufgabe wird dadurch gelöst, dass die Faltzonen durch Schweissdruck oder sonstige Verfahren erzielte Flachbereiche sind, die im gefalteten Zustand der Folienbahn die Befestigungs- und Führungsmittel von aussen ansetzbar tragen.

Durch diese Massnahme wird die der Erfindung zugrundeliegende Aufgabe gelöst, da nunmehr ein enges Zusammenfalten der Folienbahn, d. h. der Faltbereiche der Folienbahn, möglich ist, die Angriffsbereiche für die Befestigungsmittel relativ fest sind und schliesslich durch die vorgeprägten Flachbereiche ein Ansetzen der Befestigungsmittel von aussen ermöglicht wird.

Vorteilhafte Ausgestaltungen der Isolierung gemäss dem Hauptanspruch sind in den Unteransprüchen definiert.

Ausführungsbeispiele der Erfindung werden nachfolgend anhand der Zeichnungen erläutert.

Die Zeichnungen zeigen dabei in
Fig. 1 eine erste Ausführungsform, in
Fig. 2 eine abgeänderte Ausführungsform, in den
Fig. 3, 4 und 5 unterschiedlich ausgebildete Haken, in
Fig. 6 die Arbeitsstellung des Hakens gemäss Fig. 5, in
Fig. 7 einen Schnitt gemäss der Linie 7 - 7 in Fig. 5 und in
Fig. 8 einen Schnitt gemäss der Linie 8 -8 in Fig. 5.

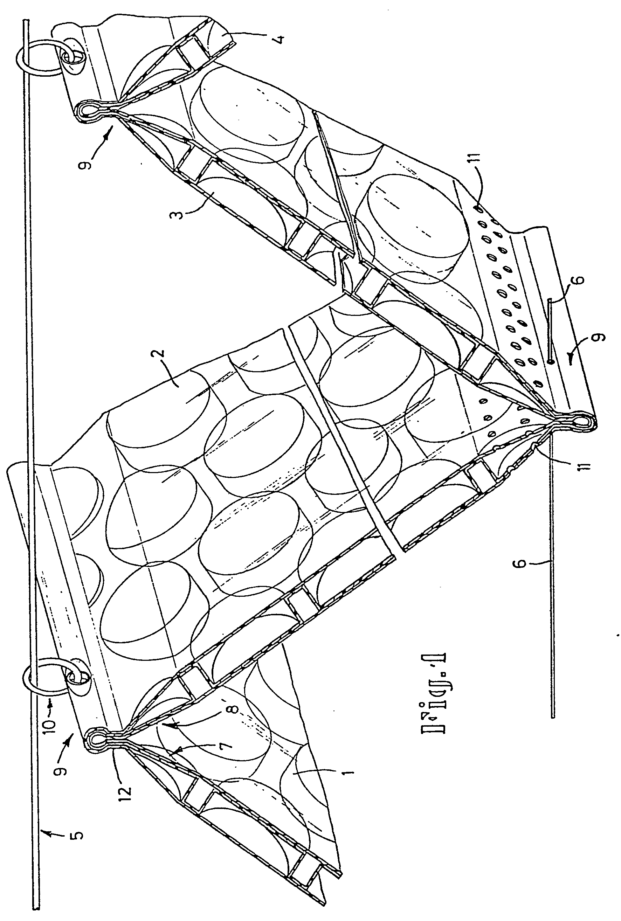

In Fig. 1 sind mit 1, 2, 3 und 4 Falten einer Noppenfolienbahn bezeichnet, die an einer Haltevorrichtung 5 aufgehängt ist. Durch die unteren Falten kann eine Zugvorrichtung 6 führen, die dem Hin- und Herbewegen der Folienbahn, d.h. dem Infaltenlegen oder Auseinanderziehen der Folienbahn dient.

Die einzelnen Folienbahnabschnitte bestehen aus an sich bekannten Noppenfolien. In den Faltzonen 9 werden bei dem in Fig. 1 dargestellten Ausführungsbeispiel durch Schweissdruck durch oder sonstige Verfahren Flachbereiche 7 und 8 erzielt, die durch einen Verstärkungsteil 12 voneinander getrennt werden, wobei der Verstärkungsteil 12 lediglich durch entsprechenden Schweissdruck erzielbar sein kann oder aber es ist auch möglich, dass in diesem Bereich ein zusätzliches Verstärkungsbauteil, wie beispielsweise eine Schnur, ein Stab, ein Gewebestreifen od. dgl. eingesetzt ist. An dem Flachbereich 7, 8 schliessen Befestigungs- und Führungsmittel 10 an, die bei dem in Fig. 1 dargestellten Ausführungsbeispiel als Ringe ausgebildet sind, mit denen die Folienbahn an der Haltevorrichtung 5 aufgehängt ist. Die Falten sind bei dem in Fig. 1 dargestellten Ausführungsbeispiel oben und unten identisch ausgebildet.

Mit 11 sind kleine in den Flachbereichen 7 und 8 angeordnete Belüftungs- und Entwässerungsöffnungen bezeichnet, die zum Abführen des Kondenswassers dienen und durch die gleich. zeitig eine Verringerung des Kondensdruckes hinter der Noppenfolienbahn herbeigeführt wird. Diese Öffnungen 11 können in den oberen und/ oder unteren Falten vorgesehen sein.

Die Noppenfolienbahn kann mit die Isolationswirkung erhöhenden Beschichtungen und/oder Einfärbungen versehen sein. So ist es beispielsweise möglich, dass die Folienbahn mit Aluminium bedampft oder beschichtet ist, wodurch die Isolationswirkung ganz erheblich erhöht wird.

Es ist ersichtlich, dass durch die in Fig. 1 dargestellte Konstruktion ein Auffalten auch langer Noppenfolienbahnen möglich ist, unabhängig davon, ob diese unterhalb der Dachfenster oder beispielsweise auch wesentlich tiefer in dem hallenförmigen Raum aufgelegt oder aufgehängt sind oder sich an den Wänden befinden, wobei das Falten auf einem relativ kleinen Raum erfolgt, so dass dadurch die Möglichkeit geschaffen wird, auch innerhalb eines Gewächshauses eine Isolierung mit Noppenfolienbahnen herbeizuführen, wobei die Noppenfolienbahnen nach Belieben einsetzbar oder entfernbar sind.

In welcher Richtung die Noppenfolienbahnen innerhalb des Gewächshauses angeordnet und bewegt werden, bleibt den örtlichen Verhältnissen überlassen.

Die Aluminiumbeschichtung oder -bedampfung kann auf beiden Seiten der Folienbahn vorgesehen werden, so dass die Folienbahn gleichzeitig auch als Kühlanlage dient, da im Sommer durch die Aluminiumbeschichtung die einfallenden Wärmestrahlen reflektiert werden. Im Winter bewirkt die Aluminiumbeschichtung an der Innenseite der Folie, dass die Wärmestrahlen aus dem Inneren des Gewächshauses wieder in dasselbe zurückgeworfen werden. Durch entsprechende Variation der Höhe der Haltevorrichtung 5 innerhalb des Gewächshauses kann in Anpassung an die im Gewächshaus gezogenen Gewächse die Höhe der Isolationsschicht innerhalb des Gewächshauses nach Belieben und leicht eingestellt werden.

Schliesslich ist darauf hinzuweisen, dass durch unterschiedliche Einfärbung der Folie gleichzeitig eine Schattierungsanlage erzielbar ist, wobei durch den Grad der Einfärbung auch der Grad der erzielten Schattierung bestimmt werden kann.

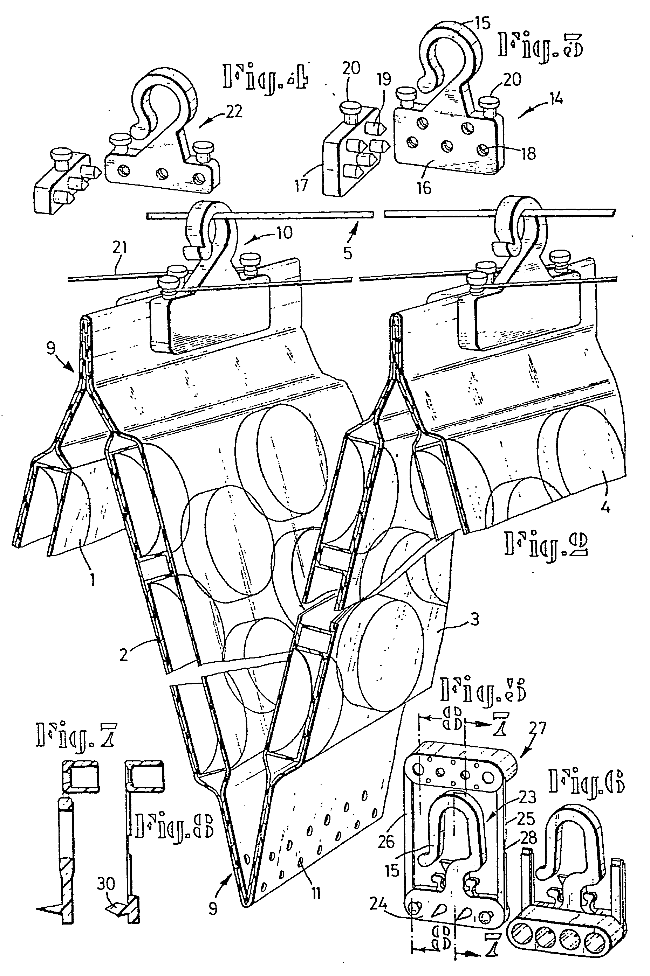

Bei der in Fig. 2 dargestellten Ausführungsform sind die Befestigungs- und Führungsmittel 10 als Hakenbauteile ausgebildet, wobei diese Hakenbauteile eine doppelte Funktion erfüllen, nämlich einmal den Anschluss der Folienbahn an die Haltevorrichtung 5, zum andern die Befestigung des Befestigungs- und Führungsmittels 10 an der eigentlichen Folienbahn.

Bei einer ersten Ausführungsform gemäss Fig. 3 wird ein Haken 14 vorgesehen, der einen offenen Haken 15 aufweist und dessen Hakenfuss als Steckbauteil ausgebildet ist mit einer Lochplatte 16 und einer Steckplatte 17. In der Lochplatte 16 sind Bohrungen 18 vorgesehen, deren Grösse an auf der Steckplatte 17 angeordnete Stecker 19 angepasst sind, so dass die Stecker 19 in den Bohrungen 18 verrastet werden können. Die Stecker 19 sind spitz zulaufend gestaltet und können somit den Flachbereich der Folienbahn durchstechen und klemmen damit die Folienbahn fest an den Haken 14.

Zusätzlich ist der Haken 14 mit Befestigungsknöpfen 20 ausgerüstet, die dem Anschluss eines Zug- und Distanzmittels 21 dienen. Mit diesem Zug- und Distanzmittel 21 kann das Auf- und Zuziehen der Folienbahn erfolgen und gleichzeitig kann durch Bestimmung der Länge des Zugmittels 21 zwischen zwei Haken die Öffnungsweite der Falte der Folienbahn bestimmt werden.

Der in Fig. 4 dargestellte Haken 22 entspricht im wesentlichen dem Aufbau des Hakens 14, nur dass die Loch- und Steckerplatte kleiner ausgebildet ist.

Von den in den Fig. 3 und 4 dargestellten Haken unterscheidet sich der in Fig. 5 dargestellte Haken 23 dadurch, dass er im wesentlichen einteilig ausgebildet ist. Der Haken 23 weist ebenfalls einen offenen Haken 15 auf und eine am Hakenfuss ausgebildete Steckerplatte 24. Zusätzlich sind Verbindungsstege 25 und 26 vorgesehen, die die eigentliche Lochplatte 27 tragen, wobei in der Mitte der Stege 25 und 26 ein Schwächungsbereich 28 vorgesehen ist, der ein leichtes Umbiegen dieser Lochplatte und Treffen der Stecker ermöglicht. Dann fluchten die Löcher der Lochplatte 27 mit den Steckern der Steckplatte 24 und legen die Folie fest. Ein Verlieren der Steckplatte 24 oder der Lochplatte 27 ist somit nicht mehr möglich und der Haken 23 ist stets einsatzbereit.

Wie insbesondere die Schnittzeichnungen in den Fig. 7 und 8 zeigen, sind die Stecker 30 spitz zulaufend ausgebildet und so gestaltet, dass ein Verrasten der Steckplatte 24 an der Lochplatte 27 erfolgt, so dass dadurch durch entsprechende Grössenwahl der Rastbauteile ein festes Anklemmen der Platten aneinander erreicht wird, wodurch auch die dazwischen eingeschlossene Folie fest eingeklemmt und damit der Aufhängedruck der Folie über den ganzen Klemmbereich verteilt wird und somit die durch die Steckbauteile geschaffenen Bohrungen in der Folie entlastet werden.

### Patentansprüche

1. Isolierung von hallenartigen Gebäuden, insbesondere Gewächshäusern, im Bereich der Dächer und Wände mittels wenigstens einer mehrschichtigen, quer zu ihrer Bewegungsrichtung auf Haltevorrichtungen (5) verschieblich getragenen und zickzackförmig (bei 9) faltbaren, wärmedämmenden Noppenfolienbahn, die mittels Zugmittel (6) hin- und herbewegbar angeordnet ist und in ihren oberen Faltzonen (9) Befestigungs- und Führungsmittel (10) trägt, dadurch gekennzeichnet, dass die Faltzonen durch Schweissdruck oder sonstige Verfahren erzielte Flachbereiche (7, 8) sind, die im gefalteten Zustand der Folienbahn die Befestigungs- und Führungsmittel (10) von aussen ansetzbar tragen.

2. Isolierung nach Anspruch 1, dadurch gekennzeichnet, dass in den Flachbereichen (7, 8) Belüftungs- und/oder Entwässerungsöffnungen (11) angeordnet sind.

3. Isolierung nach Anspruch 1 und 2, dadurch gekennzeichnet, dass die Befestigungs- und Führungsmittel (10) als an den Flachbereichen (7, 8) anklemmbare Haken (14, 22, 23) ausgebildet sind.

4. Isolierung nach Anspruch 1 und 2, dadurch gekennzeichnet, dass die Befestigungs- und Führungsmittel (10) in den Flachbereichen (7, 8) eingesetzte Ringösen sind.

5. Isolierung wenigstens nach Anspruch 1, gekennzeichnet durch eine die Isolationswirkung erhöhende graduell einstellbare Beschichtung, Bedampfung und/oder Einfärbung der Folienbahn.

6. Isolierung nach Anspruch 1, gekennzeichnet durch eine die Schattierung bewirkende graduell einstellbare Beschichtung, Bedampfung und/oder Einfärbung der Folienbahn.

7. Isolierung nach Anspruch 3, dadurch gekennzeichnet, dass der Hakenfuss als Steckbauteil ausgebildet ist, das aus einer Lochplatte (16, 27) und einer Steckplatte (17, 24) besteht, wobei der oder die Stecker der Steckplatte mit dem oder den Löchern der Lochplatte fluchten und sich in diesen verankern.

8. Isolierung nach Anspruch 7, gekennzeichnet durch biegbare Verbindungsbügel (25, 26) zwischen Steckplatte (24) und Lochplatte (27).

9. Isolierung wenigstens nach Anspruch 3, 7 und 8, gekennzeichnet durch Befestigungsknöpfe (20) an den Haken (14, 22, 23) zum Anschluss von Zug- und Distanzmitteln (21).

10. Isolierung nach Anspruch 8, gekennzeichnet durch Schwächungsbereiche (28) in den Verbindungsbügeln (25, 26).

**Revendications**

1. Isolation de bâtiment du genre halles, en particulier serres de culture, au niveau des couvertures et des murs au moyen au moins d'un ruban de feuilles à nopes multicouche, isolant thermique, monté à coulissement transversalement à son orientation sur des dispositifs-support (5) et pliable en zig-zag (en 9), ledit ruban étant déployable par un moyen de traction (6) et supportant dans ses zones de pli supérieures (9) des moyens de fixation et de guidage (10), caractérisée en ce que les zones de pli sont des zones plates (7, 8) obtenues par soudage sous pression ou autre procédé, qui à l'état plié du ruban de feuilles supportent les moyens de fixation et de guidage (10) posables de l'extérieur.

2. Isolation selon la revendication 1, caractérisée en ce que dans les zones plates (7, 8) sont ménagés des orifices d'aération et/ou d'écoulement (11).

3. Isolation conforme aux revendications 1 et 2, caractérisée en ce que les moyens de fixation et de guidage (10) sont sous la forme de crochets (14, 22, 23) enserrant les zones plates (7, 8).

4. Isolation conforme aux revendications 1 et 2, caractérisée en ce que les moyens de fixation et de guidage (10) sont des oeillets annulaires introduits dans les zones plates (7, 8).

5. Isolation conforme au moins à la revendication 1, caractérisée par un revêtement, une métallisation et/ou une coloration du ruban de feuilles ajustables graduellement en augmentant l'effet de l'isolation.

6. Isolation conforme à la revendication 1, caractérisée par un revêtement, une métallisation et/ou une coloration du ruban de feuilles ajustables graduellement en agissant sur l'ombrage.

7. Isolation conforme à la revendication 3, caractérisée en ce que la base de crochet est sous la forme d'un accouplement comprenant une plaque trouée (16, 27) et une plaque à fiches (17, 24), la ou les fiches de la plaque à fiches étant alignées avec le ou les trous de la plaque trouée et s'ancrant dans ceux-ci.

8. Isolation conforme à la revendication 7, caractérisée par des étriers de liaison (25, 26) entre la plaque à fiches (24) et la plaque trouée (27).

9. Isolation conforme aux revendications 3, 7 et 8, caractérisée par des mamelons de fixation (20) des crochets (14, 22, 23) pour liaison à des moyens de traction et d'écartement (21).

10. Isolation conforme à la revendication 8, caractérisée par des zones amincies (28) dans les étriers de liaison (25, 26).

**Claims**

1. An insulation for hall-like buildings, particularly greenhouses, in the region of the roofs and walls, by means of at least one multilayer, heat insulating web of knob foil which is carried for displacement on holding devices (5), transversely to its direction of movement and can be folded into zig-zag shape (at 9), and which is adapted for movement backwards and forwards by means of drawing means (6) and carries securing and guide means (10) in its upper fold regions (9), characterised in that the fold regions are flat regions (7, 8) which are obtained by welding pressure or other methods and which, in the folded state of the web of foil carry the securing and guide means (10) which can be fitted from the outside.

2. An insulation as claimed in Claim 1, characterised in that ventilating and/or drainage openings (11) are disposed in the flat regions (7, 8).

3. An insulation as claimed in Claims 1 and 2, characterised in that the securing and guide means (10) are constructed in the form of hooks (14, 22, 23) which can be clipped onto the flat regions (7, 8).

4. An insulation as claimed in Claims 1 and 2 characterised in that the securing and guide means (10) are eye rings inserted in the flat regions (7, 8).

5. An insulation at least as claimed in Claim 1, characterised by a coating, vapour-deposition and/or dyeing of the web of foil, which is gradually adjustable and increases the insulation effect.

6. An insulation as claimed in Claim 1, characterised by a coating, vapour-deposition and/or dyeing of the web of foil which is gradually adjustable and causes the shading.

7. An insulation as claimed in Claim 3, characterised in that the foot of the hook is constructed in the form of a plug-in component which consists of a perforated plate (16, 27) and a plug-in plate (17, 24), and the plug or plugs of the plug-in plate are in alignment with the hole or holes in the perforated plate and become anchored in these.

8. An insulation as claimed in Claim 7, characterised by flexible connecting straps (25, 26) between plug-in plate (24) and perforated plate (27).

9. An insulation at least as claimed in Claims 3, 7 and 8, characterised by attachment knobs (20) on the hooks (14, 22, 23) for the connection of drawing and spacing means (21).

10. An isulation as claimed in Claim 8, characterised by weakened regions (28) in the connecting straps (25, 26).

Fig. 1

Fig. 4

Fig. 3

Fig. 2

Fig. 7

Fig. 8

Fig. 5

Fig. 6